# EUROPEAN PATENT SPECIFICATION

(11) **EP 3 578 878 B1**
(45) Date of publication and mention of the grant of the patent: **29.06.2022**
(21) Application number: 18213964.2
(22) Date of filing: 19.12.2018
(51) Int. Cl.: F21V 8/00, G02B 6/00

(54) **LIGHT GUIDE DEVICE**
LICHTLEITERVORRICHTUNG
DISPOSITIF DE GUIDAGE DE LUMIÈRE

(30) Priority: 08.06.2018 US 201862682223 P
(43) Date of publication of application: 11.12.2019
(73) Proprietor: G. Skill International Enterprise Co., Ltd., Taipei City 110 (TW)
(72) Inventor: HUANG, Chiung-Huang, Taipei City (TW)
(74) Representative: Germain Maureau

(56) References cited:
- US-A1- 2016 363 711
- US-A1- 2017 123 136
- Hassan Mujtaba: "GSkill Unveils Trident Z Royal RGB, The Sexiest Memory on The Planet", , 5 June 2018 (2018-06-05), XP055607401, Retrieved from the Internet: URL:https://wccftech.com/gskill-trident-z- royal-rgb-memory-computex-2018/ [retrieved on 2019-07-19]

## Description

This application claims priority benefit of U.S. Provisional Application No. 62/682,223 filed on June 8, 2018.

### BACKGROUND OF THE INVENTION

### 1. Field of the Invention:

The present invention relates to light guide technology and more particularly, to a light guide device for use in computers and computer peripheral devices, which uses a plurality of continuously connected and irregularly configured light guide components to improve brightness uniformity by guiding light to the overall area of the light guide device and, which eliminates the use of any light diffusing agent so that the light projecting distance and range are increased, producing aurora-like glare effects and achieving a wide range of light emission.

### 2. Description of the Related Art:

With the improvement in computer performance and efficiency, memories, processors and other computer peripheral devices (such as keyboards, etc.) for use in computer systems have also flourished. At present, the memory device used in e-sports products has the requirement of sound and light effects. Therefore, light-emitting devices (such as light-emitting diodes) are usually installed on the memory, and a light guide is arranged on the outside of the light-emitting devices. The light-emitting devices emit light toward the outside. The light emitted by the light-emitting devices is scattered evenly through the light guide to achieve good illumination and visual effects.

However, if the light guide is directly made of a material having high transparency and when the light-emitting devices emit light to the light guide, the light emitted by the light-emitting devices will directly pass through the light guide. When the user watches the light guide, the light guide may have a brighter brightness on the portion that faces the light-emitting devices, resulting in generation of uneven brightness and glare. In order to prevent generation of uneven brightness and glare, light guide manufacturers may add a fine particle-shaped light diffusing agent to the material for manufacturing the light guide, so that when the light passes through the light guide, the light diffusing agent can be used to refract and diffuse the light, thereby making the overall light output uniform. However, since the light is refracted by the light diffusing agent multiple times, the light is softened, and the phenomenon of fogging occurs, shortening the light projection distance and range and making the lighting effect less beautiful. Moreover, most of the light guides are designed to be flat strips. After the light passes through the light guides, it will only be uniformly scattered outwardly. A light guide through such a design makes the optical visual effect too tedious and cannot have gorgeous light refraction effect. It is difficult to attract consumers' attention.

US 2016/363711 A1 discloses a system comprising a light source and a waveguide arranged to receive light from the light source at a horizontally positioned surface and distribute the light through a vertically positioned surface, wherein the waveguide comprises at least one headlighting reduction region configured to reduce the magnitude of luminance modulation from the waveguide and at least one output intensity shaping region configured to increase the uniformity of light distribution from the waveguide.

US2017/123136 A1 discloses a dynamic random access memory, including a main body, having a substrate, a light-emitting module and a light-guiding portion, the substrate provided with a memory module, the light-emitting module having a carrier board and a light-emitting portion disposed on the carrier board, the light-guiding portion being arranged corresponding to the light-emitting portion, at least a part of light from the light-emitting portion being projected to outside of the dynamic random access memory through the light-guiding portion.

Therefore, how to solve the above-mentioned problems and inconvenience is the direction that the relevant industry is eager to study and improve.

### SUMMARY OF THE INVENTION

The present invention has been accomplished under the circumstances in view. It is a first object of the present invention to provide a light guide device, which is made of a light diffusing agent-free light transmissive material and adapted for use in computers and computer peripheral devices to improve brightness uniformity, comprising a base provided with a light-incident surface at one side thereof to face toward the light-emitting side of a plurality of predetermined light-emitting devices and a plurality of continuously connected and irregularly configured light guide components located on at least one side of the base and capable of unevenly projecting light passing therethrough toward the outside and respectively provided with at least three light-emitting surfaces. Each light-emitting surface defines with the base a respective contained angle that causes a glare effect when light passes through the respective light guide component. The arrangement of the continuously connected and irregularly configured light guide components on the base of the light guide device is capable of unevenly projecting light passing therethrough toward the outside, therefore, the light guide components guides the light to the entire light guide device to improve the uniformity of the overall brightness of the light guide device, thereby allowing the light guide device to emit a transparent and bright aesthetic sense. Uniform brightness can be used to prevent the viewer from seeing the light-emitting devices directly, avoiding glaring and uncomfortable eyes. Because the light guide device is not added with a light diffusion agent and can work with the light guide components to unevenly output the light emitted by the light-emitting devices, it effectively increases the light projection distance and range to produce a glare-like effect that is as beautiful as the aurora. In this way, the light-emitting effect can be more dazzling, so as to enhance the aesthetics of the projected light, thereby increasing the desire of the consumer to purchase.

It is a second object of the present invention to provide a light guide device, which does not need to add a light diffusing agent, so that the manufacturing cost can be reduced, and the phenomenon of uneven brightness and fogging can be avoided, thereby improving brightness uniformity and increasing the light projection distance and range.

It is a third object of the present invention to provide a light guide device, which is so designed that after installation of the light guide device in the memory, the light-emitting devices are located directly below the light-emitting surfaces of the light guide components and are not located at the intersection of the light-emitting surfaces. When the light-emitting devices emit light upward, the light-emitting surfaces produce good refracting effects without refracting light onto the intersections of the light-emitting surfaces, eliminating the problem of being too bright or too dark and further improving the overall brightness intensity of the light guide device and the brightness uniformity.

It is a fourth object of the present invention to provide a light guide device, wherein the light guide components that are arranged on the light guide device to face the light-emitting devices include two outer light guide components and a plurality of inner light guide components of two different heights alternatively arranged between the two outer light guide components, and the two outer light guide components are higher than the relatively shorter inner light guide components. This arrangement achieves better continuity of the light source, thereby improving brightness uniformity. Since the two outer light guide components is relatively higher than inner light guide components, the light projecting distance is effectively increased.

It is a fifth object of the present invention to provide a light guide device, which is so designed that when the light-emitting devices emit light onto the planar light-incident surface of the base, the flat design of the planar light-incident surface minimizes light reflection and effectively refracts incident light onto the light guide components, thereby increasing the light output an light projection range of light guide device to create a glare effect.

It is a sixth object of the present invention to provide a light guide device, wherein the light-incident surface of the base is planar. When removing the light guide device from the mold, the planar light-incident surface is flat, so that the mold release point is not generated, thereby reducing the difficulty of manufacturing the light guide device. This allows the light guide device to be mass produced through the mold.

It is a seventh object of the present invention to provide a light guide device, which is preferably made of polycarbonate, acrylonitrile butadiene styrene copolymer or a combination of the two. It can make the surface of the light guide device less prone to fogging and blurring when it is used for a long time, so as to maintain a good light extraction rate and prolong the service life of the light guide device.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is an oblique top elevational view of a light guide device in accordance with the present invention.
FIG. 2 corresponds to FIG. 1 when viewed from another angle.
FIG. 3 is sectional side view, in an enlarged scale, of a part of the light guide device in accordance with the present invention.
FIG. 4 is an exploded view of the present invention before installation of the light guide device in the memory.
FIG. 5 is an elevational view illustrating the light guide device of the present invention installed in the memory.
FIG. 6 is a schematic drawing illustrating the light emitted by the light-emitting devices passed through the light guide device.
FIG. 7 is a sectional side view, illustrating the light guide device of the present invention installed in the memory.
FIG. 8 is an enlarged view of part "a" of FIG. 7.

### DETAILED DESCRIPTION OF THE PREFERRED EMBODIMENT

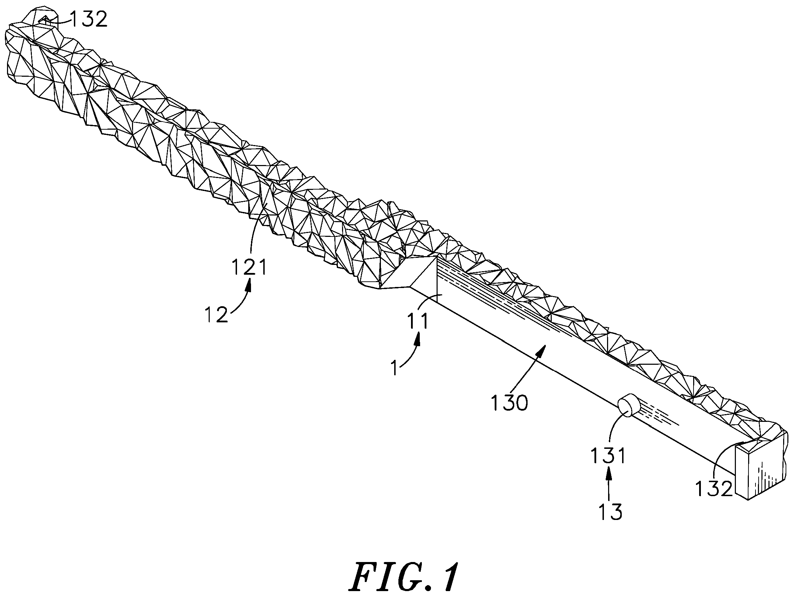

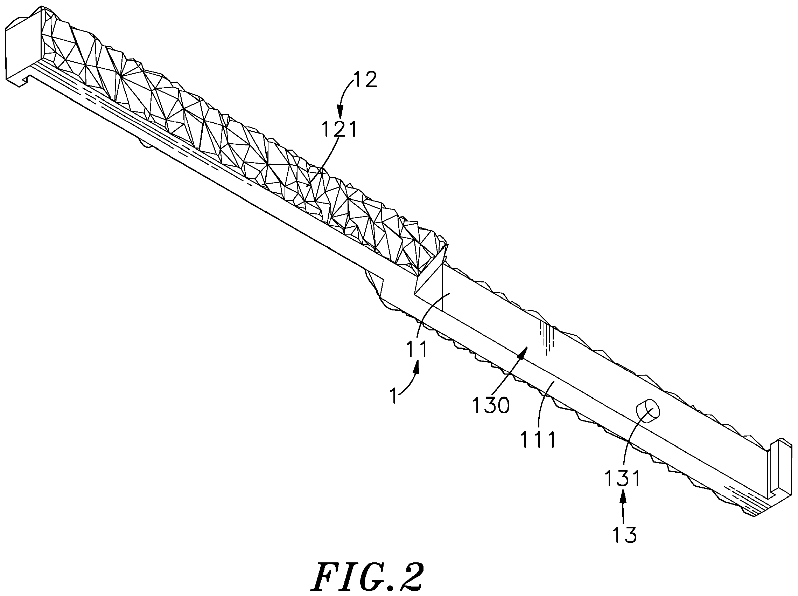

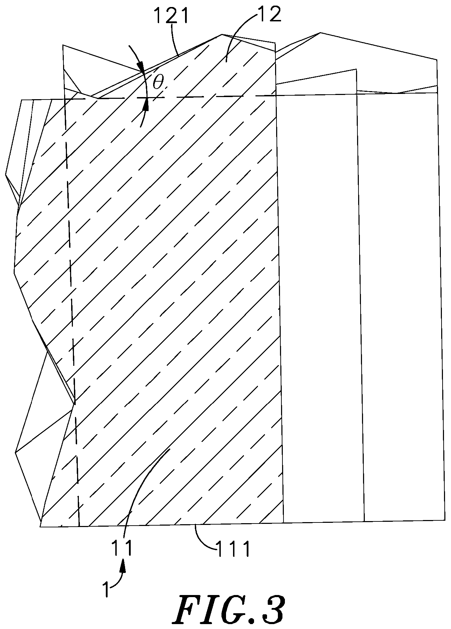

Referring to FIGS. 1-3, an elevational view of a light guide device in accordance with the present invention, another elevational view of the light guide device and a sectional side view of the light guide device are shown. A light guide device 1 of the present invention is made of a light transmissive material without a light diffusing agent, comprising a S-shaped base **11** having a planar light-incident surface **111** located on at least one side thereof, a plurality of continuously connected and irregularly configured light guide components **12** located on at least one side of the base **11** and capable of unevenly projecting light passing therethrough toward the outside and respectively provided with at least three light-emitting surfaces **121** that respectively define with the base **11** a respective contained angle **θ** that causes a glare effect when light passes through the respective light guide component **12,** and a mounting structure **13** located on the base **11.** The mounting structure **13** comprises a plurality of recessed receiving grooves **130** respectively located on left and right sides of the base **11** and facing in opposite directions, a cylindrical positioning column **131** protruded from an inner wall of each recessed receiving groove **130,** and two C -shaped hooks **132** respectively located at two opposite ends of the base **11.**

The light guide device **1** is made of a light-transmissive material without a light diffusion agent. The light-transmissive material can be selected from the group of polycarbonate (PC), acrylonitrile butadiene styrene (ABS) resin, acrylic, and glass. Preferably, the light guide device **1** may preferably be polycarbonate, acrylonitrile butadiene styrene copolymer or a combination of the two. Polycarbonate or acrylonitrile butadiene styrene copolymer has the characteristics of high surface smoothness, high transparency and high heat resistance. Based on characteristics of high surface smoothness, high transparency and high heat resistance, the surface of the light guide device **1** is not prone to matte when used for a long time, prolonging the service life. Further, before the light guide device **1** is released from a mold (such as a steel mold), the mold can be polished with a diamond paste to make the inner surface of the mold smooth and bright. When the plastic material (such as polycarbonate, acrylonitrile butadiene styrene copolymer or a combination thereof) is injection-molded and released from the mold, optical facets that are smooth and have better refraction effect are formed on the outer surface of the light guide device **1** thus produced. Since the planar light-incident surface **111** of the base **11** is flat, when releasing the light guide device **1** from the mold, no uneven release point will be generated, and therefore the light guide device **1** can be smoothly and quickly released from the mold, lowering the difficulty of manufacturing of the light guide device **1** and having the advantage of mass production.

Further, at least two light guide components **12** are formed on the base **11** of the light guide device **1** in a square area of 1 square centimeter. The light guide components **12** of the light guide device **1** can be triangular, tetragonal, pentagonal, hexagonal, heptagonal, octagonal or other irregular shape.

Further, the contained angle **θ** defined between the base **11** of the light guide device **1** and each light-emitting surface **121** of the light guide component **12** is within the range of 10°~85°, or preferably 25°~65°.

The angles **θ** defined between the plurality of light-emitting surfaces **121** in each light guide component **12** and the base **11** can be different from each other by different combinations of cutting angles, so that the outer surface of each light guide component **12** can be formed with different depths and each light guide component **12** with the respective multiple light-emitting surfaces **121** can be shaped like a diamond to have better uneven light-emitting effect.

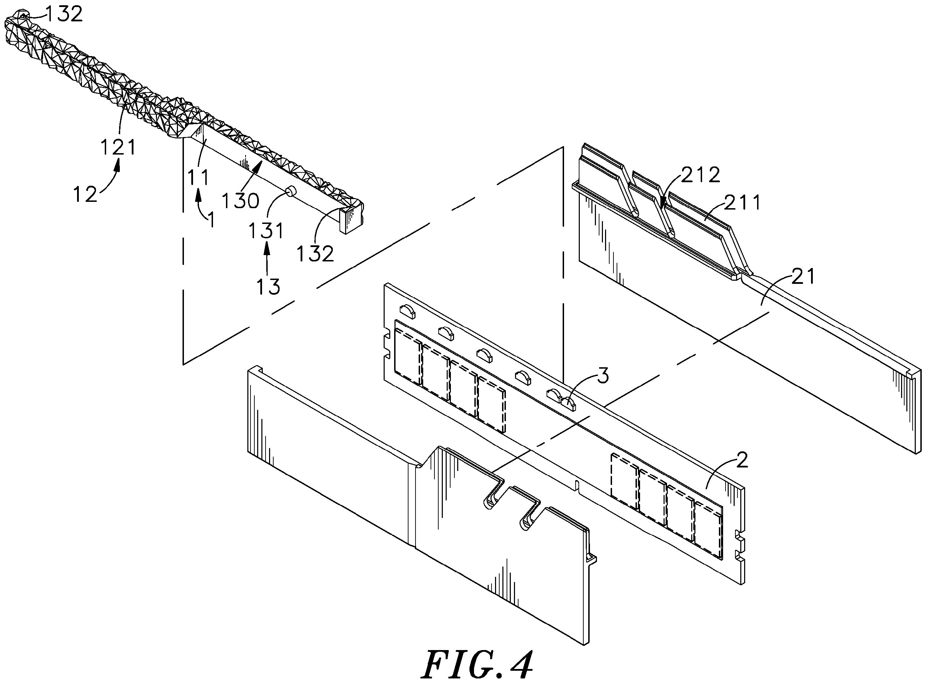

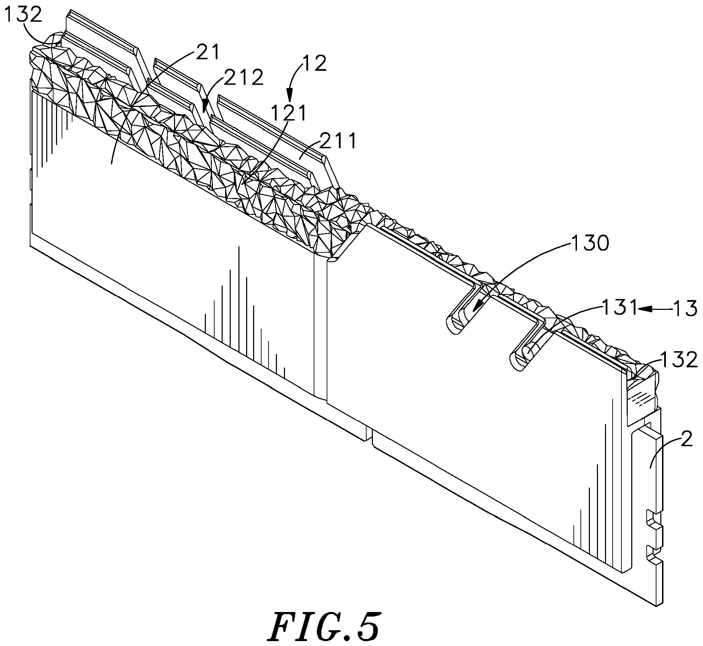

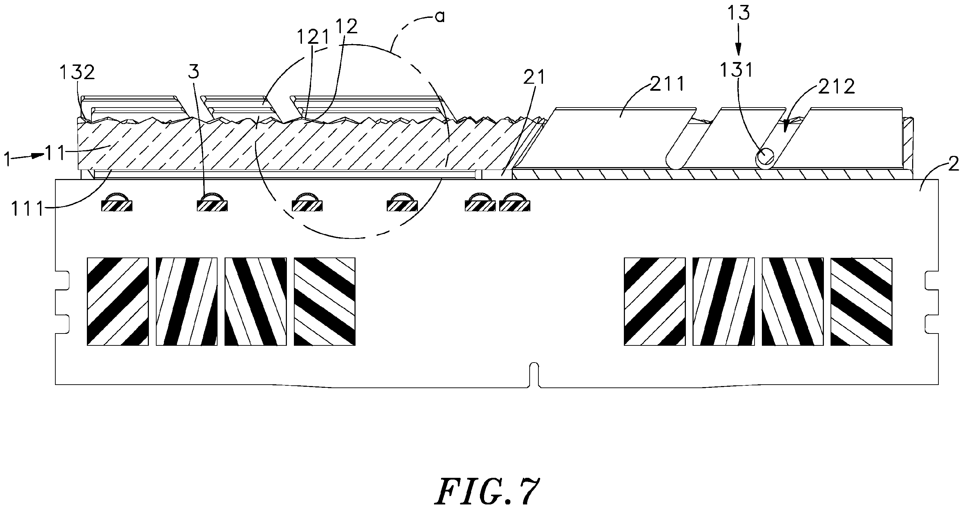

Referring to FIGS. 4-8, an exploded view before installation of the light guide device in a memory, an elevational view after installation of the light guide device in the memory, a schematic drawing during light emitting of the light-emitting device, a sectional side view after installation of the light guide device in the memory and an enlarged view of part "a" of FIG. 7 are shown. It can be clearly seen from the drawings that in the actual use, the light guide device **1** is mounted on a heat dissipating device **21** of a memory **2.** The heat dissipating device **21** comprises a plurality of radiation fins **211** located at the top thereof. Each radiation fin **211** has a plurality of positioning slots **212** obliquely downwardly extended from the topmost edge thereof. When mounting the light guide device **1** on the heat dissipating device **21,** the radiation fins **211** of the heat dissipating device **21** are respectively received in the recessed receiving grooves **130** of the mounting structure **13,** and at the same time, the cylindrical positioning columns **131** of the mounting structure **13** are respectively engaged in respective positioning slots **212** of the heat dissipating device **21,** and the two hooks **132** of the mounting structure **13** are respectively hooked on two opposite sides of the heat dissipating device **21.** Thus, the light guide device **1** is steadily secured to the heat dissipating device **21** of the memory **2.** After the light guide device **1** is secured to the heat dissipating device **21** of the memory **2,** the planar light-incident surface **111** of the base **11** is disposed to face toward the light-emitting side of multiple light-emitting devices **3** at the memory **2.**

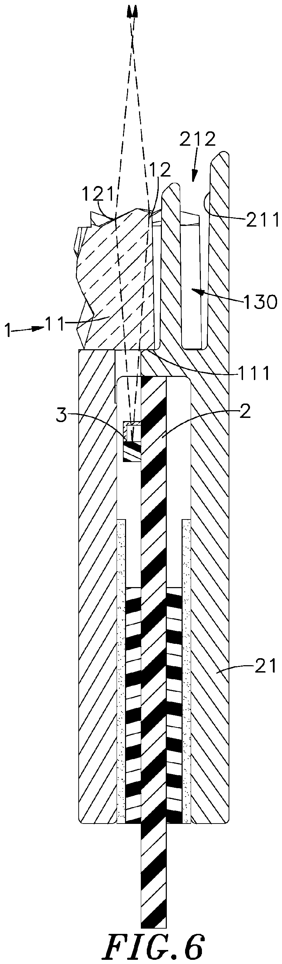

When the light-emitting devices **3** are activated to emit light, the emitted light falls upon the planar light-incident surface **111** of the base **11,** and the incident light is refracted in the base **11** onto the light guide components **12** where the light guide components **12** emit the light through the light-emitting surfaces **121** toward the outside. The arrangement of the light-emitting surfaces **121** enables light rays to be concentrated on the area around the intersections of the light-emitting surfaces **121** (see FIG. 6), thus, the distance from which the light is projected can be increased. Further, because the light guide components **12** on the base **11** are continuously connected and irregularly configured, the light guide components **12** can be used to make the light unevenly emitted and diverted. Thereby, the uniformity of the overall brightness of the light guide device **1** is improved, causing generation of a glare effect and an increase in the light projection range and distance. Thus, the design of the light guide components **12** makes the light guide device **1** more dazzling.

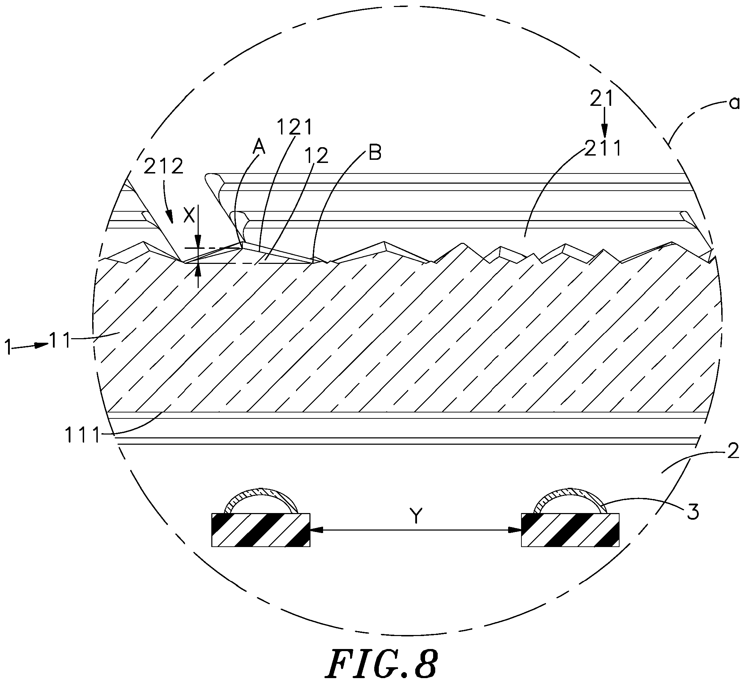

After installation of the light guide device **1** in the memory **2,** the direct light emitting direction of the light-emitting devices **3** is opposite to the light-emitting surfaces **121** of the light guide components **12** (in FIG. 8, the light-emitting devices **3** are disposed right below the light-emitting surfaces **121)** but not opposite to the intersection of the light-emitting surfaces **121** (see point A or point B in FIG. 8). When the light-emitting devices **3** are activated to emit light upward, if the light is projected toward the intersection of the light-emitting surfaces **121,** the poor refractive effect at the intersection will make the brightness to be too bright or too dark (e.g. the light will be too bright if the light is emitted from point A, or the light will be too dark if the light emitted from point B), resulting in poor overall brightness uniformity. Therefore, the light-emitting devices **3** are located directly below the light-emitting surfaces **121** of the light guide components **12** so that the light is projected toward the light-emitting surfaces **121** to achieve a good refractive effect, thereby improving the overall brightness intensity and uniformity of the light guide device **1.**

Referring to FIG. 8, the height X of the light guide components **12** is preferably within the range of 0.8mm~1.2mm; the pitch Y of the light-emitting devices **3** is 15mm. Through the above-mentioned size design, the light guide device **1** can produce good light guiding effect in a limited space of the computer and the computer peripheral device. As described above, the planar light-incident surface **111** of the base **11** faces toward the light-emitting devices **3** and the direct light emitting direction of the light-emitting devices **3** is opposite to the light guide components **12.** Further, the light guide components **12** include two outer light guide components **12** and a plurality of inner light guide components **12** of two different heights alternatively arranged between the two outer light guide components **12,** wherein the two outer light guide components **12** are higher than the relatively shorter inner light guide components **12.** This arrangement achieves better continuity of the light source, thereby improving brightness uniformity. Since the two outer light guide components **12** is relatively higher than inner light guide components **12,** the light projecting distance is effectively increased. In one example of the present invention, the pitch of the light-emitting devices **3** is 15mm, the height of the two outer light guide components **12** is 1mm, and the inner light guide components **12** are of two different heights, i.e., 0.8mm and 1mm and are alternatively arranged between the two outer light guide components **12.** Thus, the light guide device **1** can extend the light source to the next inner light guide component **12** with a height of 1 mm through the adjacent inner light guide component **12** having a height of 0.8 mm, thereby effectively continuing the light source and improving the uniformity of brightness of the light guide device **1** to achieve a good lighting effect.

In the present preferred embodiment, the light guide device **1** is disposed adjacent to the light-emitting devices **3,** however, in actual application, the light guide device **1** can be directly attached onto the surfaces of the light-emitting devices **3.** Further, the light-emitting devices **3** are preferably light-emitting diodes (LEDs), however, in actual application, organic light-emitting diodes (OLEDs), incandescent lamps or halogen lamps can be used to replace light-emitting diodes (LEDs). Since the light guide device **1** uses the continuously connected and irregularly configured light guide components **12** to improve the overall brightness uniformity, no light diffusing agent shall be added, and thus, the manufacturing cost of the light guide device **1** can be reduced. Further, the light emitted by the light-emitting devices **3** is refracted by the light guide components **12,** which not only does not cause unevenness of light and dark, but also does not contain a light diffusing agent, so that fogging does not occur, achieving better brightness uniformity, longer projection distance and wider projection range.

Preferably, the light guide device **1** is disposed on the heat dissipating device **21** of the memory **2.** In actual application, the light guide device **1** can be installed in a cooling fan or CPU inside a computer that is provided with the light-emitting devices **3,** or directly mounted on the light-emitting devices **3** in a computer; alternatively, the light guide device **1** can be used in a light-emitting keyboard or mouse or any other peripheral apparatus that is provided with the light-emitting devices **3.** Because the light guide device **1** has good light guiding and glare effects when applied to a computer or a computer peripheral apparatus, it can be widely favored by the esports industry manufacturers, thereby improving the overall product competitiveness. The light guide device **1** uses the recessed receiving grooves **130** of the mounting structure **13** to receive the radiation fins **211** of the heat dissipating device **21** and uses the cylindrical positioning columns **131** and the hooks **132** for mounting. In actual application, clamps, pins or other positioning devices can be used to secure the light guide device **1** to the heat dissipating device **21.** There are many ways for the light guide device **1** to be combined with the heat dissipating device **21,** so that any structure that can achieve the aforementioned effects should be covered by the present invention, and such simple modifications should be included in the present invention.

Further, the light-incident surface **111** of the base **11** of the light guide device **1** is planar. When the at least one light-emitting device **3** emits light onto the light-incident surface **111** of the base **11,** the planar light-incident surface **111** minimizes light reflection, enabling incident light to be accurately refracted onto the light guide components **12,** reducing light leakage and increasing the light output of light guide device **1,** and therefore, the light projection range is relatively increased.

Further, because a contained angle **θ** within the range of 10°~85° is defined between the base **11** of the light guide device **1** and each light-emitting surface **121** of each light guide component **12,** when the at least one light-emitting device **3** emits light onto the light guide device **1,** the different angles of the light-emitting surfaces **121** of the light guide components **12** can refract light in different light paths, causing non-uniform outward scattering of light. Therefore, the contained angle **θ** can be used to reduce the occurrence of backward light refracting, thereby increasing the light extraction rate and refractive index of the light guide component **12.**

In conclusion, the invention has the advantages as follows:
(1) The arrangement of the continuously connected and irregularly configured light guide components **12** on at least one side of the base **11** of the light guide device **1** is capable of unevenly projecting light passing therethrough toward the outside, therefore, the light guide components **12** guides the light to the entire light guide device **1** to improve the uniformity of the overall brightness of the light guide device **1,** thereby allowing the light guide device **1** to emit a transparent and bright aesthetic sense. Uniform brightness can be used to prevent the viewer from seeing the light-emitting elements **3** directly, avoiding glaring and uncomfortable eyes. Because the light guide device **1** is not added with a light diffusion agent and can work with the light guide components **12** to unevenly output the light emitted by the light-emitting devices **3,** it effectively increases the light projection distance and range to produce a glare-like effect that is as beautiful as the aurora. In this way, the light-emitting effect can be more dazzling, so as to enhance the aesthetics of the projected light, thereby increasing the desire of the consumer to purchase.
(2) The light guide device **1** uses the continuously connected and irregularly configured light guide components **12** to improve the overall brightness uniformity and the light projection distance and range without adding any light diffusing agents. Thus, the quantity of light-emitting devices **3** can be minimized, reducing the overall manufacturing cost. Further, the light emitted by the light-emitting devices **3** is refracted by the light guide components **12,** avoiding uneven brightness and fogging, so that it can have better brightness uniformity and increased projection distance and projection range.
(3) After installation of the light guide device **1** in the memory **2,** the light-emitting devices **3** are located directly below the light-emitting surfaces **121** of the light guide components **12,** and are not located at the intersection of the light-emitting surfaces **121.** When the light-emitting devices **3** emit light upward, the light-emitting surfaces **121** produce good refracting effects without refracting light onto the intersections of the light-emitting surfaces **121,** eliminating the problem of being too bright or too dark and further improving the overall brightness intensity of the light guide device **1** and the brightness uniformity.
(4) The light guide components **12** that are arranged on the light guide device **1** to face the light-emitting devices **3** include two outer light guide components **12** and a plurality of inner light guide components **12** of two different heights alternatively arranged between the two outer light guide components **12,** and the two outer light guide components **12** are higher than the relatively shorter inner light guide components **12.** This arrangement achieves better continuity of the light source, thereby improving brightness uniformity. Since the two outer light guide components **12** is relatively higher than inner light guide components **12,** the light projecting distance is effectively increased.
(5) When the light-emitting devices **3** emit light onto the planar light-incident surface **111** of the base **11,** the flat design of the planar light-incident surface **111** minimizes light reflection and effectively refracts incident light onto the light guide components **12,** thereby increasing the light output and light projection range of light guide device **1** to create a glare effect.
(6) The light-incident surface **111** of the base **11** is planar. When removing the light guide device **1** from the mold, the planar light-incident surface **111** is flat, so that the mold release point is not generated, thereby reducing the difficulty of manufacturing the light guide device **1.** This allows the light guide device **1** to be mass produced through the mold.
(7) The light guide device **1** is preferably made of polycarbonate, acrylonitrile butadiene styrene copolymer, or a combination of the two. It can make the surface of the light guide device **1** less prone to fogging and blurring when it is used for a long time, so as to maintain a good light extraction rate and prolong the service life of the light guide device **1.**

Although a particular embodiment of the invention has been described in detail for purposes of illustration, various modifications and enhancements may be made without departing from the scope of the invention. Accordingly, the invention is not to be limited except as by the appended claims.

## Claims

1. A light guide device (1) made of a light diffusing agent-free light transmissive material and adapted for use in computers and computer peripheral devices to improve brightness uniformity, comprising a base (11) provided with a light-incident surface (111) at one side thereof to face toward a light-emitting side of a plurality of predetermined light-emitting devices (3), and a plurality of continuously connected and irregularly configured light guide components (12) located on at least one side of said base (11) and capable of unevenly projecting light passing therethrough toward the outside and respectively provided with at least three light-emitting surfaces (121), each said light-emitting surface (121) defining with said base (11) a respective contained angle that causes a glare effect when light passes through the respective said light guide component (12), said contained angle being within the range of 10°~85°, **characterized in that** the direct light emitting direction of said predetermined light-emitting devices (3) is opposite to said light-emitting surfaces (121) of said light guide components (12) but not opposite to the intersection of the light-emitting surfaces (121), whereby the light-emitting devices (3) are located directly below the light-emitting surfaces (121) of the light guide components (12) and **in that** the light guide components (12) include two outer light guide components (12) and a plurality of inner light guide components (12) of two different heights alternatively arranged between said two outer light guide components (12), said two outer light guide components (12) being higher than the relatively shorter said inner light guide components (12).

2. The light guide device as claimed in claim 1, wherein said light guide device (1) is made from polycarbonate.

3. The light guide device as claimed in claim 1, wherein said light guide device (1) is made from acrylonitrile butadiene styrene copolymer.

4. The light guide device as claimed in claim 1, wherein said light guide device (1) is made from a combination of polycarbonate and acrylonitrile butadiene styrene copolymer.

5. The light guide device as claimed in claim 1, wherein at least two said light guide components (12) are formed on said base (11) in a square area of 1 square centimeter.

6. The light guide device as claimed in claim 1, wherein said light-incident surface (111) of said base (11) is planar.

7. The light guide device as claimed in claim 1, wherein said contained angle defined between each said light-emitting surface (121) and said base (11) is preferably within the range of 26°~65°.

8. The light guide device as claimed in claim 1, wherein said light guide components (12) are selectively triangular, tetragonal, pentagonal, hexagonal, heptagonal or octagonal shape.

9. The light guide device as claimed in claim 1, wherein the height of said light guide components (12) is within the range of 0.8mm~1.2mm; the pitch of said predetermined light-emitting devices (3) is 15mm.

10. The light guide device as claimed in claim 1, further comprising a mounting structure (13) located on said base (11), said mounting structure (13) comprising a plurality of recessed receiving grooves (130) respectively located on opposing left and right sides of said base (11) and facing in opposite directions, a cylindrical positioning column (131) protruded from an inner wall of each said recessed receiving groove (130), and two hooks (132) respectively located at two opposite ends of said base (11).

## Patentansprüche

1. Lichtleitervorrichtung (1), hergestellt aus einem lichtdurchlässigen Material, das frei von Lichtdiffusionsmittel ist und zur Verwendung in Computern und Peripheriegeräten von Computern zur Verbesserung der Gleichmäßigkeit der Helligkeit angepasst ist, umfassend eine Basis (11), versehen mit einer Lichteinfallsoberfläche (111) auf einer Seite davon, um einer lichtemittierenden Seite einer Vielzahl vorgegebener lichtemittierender Vorrichtungen (3) gegenüberzustehen, und einer Vielzahl von kontinuierlich verbundenen und unregelmäßig konfigurierten Lichtführungskomponenten (12), die sich auf mindestens einer Seite der Basis (11) befinden und in der Lage sind, durch sie hindurch strömendes Licht ungleichmäßig nach außen zu projizieren, und die jeweils mit mindestens drei lichtemittierenden Oberflächen (121) versehen sind, wobei jede lichtemittierende Oberfläche (121) mit der Basis (11) einen jeweils eingeschlossenen Winkel definiert, der einen Blendeffekt bewirkt, wenn Licht durch die jeweilige Lichtführungskomponente (12) strömt, wobei der eingeschlossene Winkel im Bereich von 10°~85° liegt, **dadurch gekennzeichnet, dass** die direkte Lichtemissionsrichtung der vorgegebenen lichtemittierenden Vorrichtungen (3) den lichtemittierenden Oberflächen (121) der Lichtführungskomponenten (12) entgegengesetzt ist, aber nicht der Schnittstelle der lichtemittierenden Oberflächen (121) entgegengesetzt ist, wobei sich die lichtemittierenden Vorrichtungen (3) direkt unter den lichtemittierenden Oberflächen (121) der Lichtführungskomponenten (12) befinden, und dadurch, dass die Lichtführungskomponenten (12) zwei äußere Lichtführungskomponenten (12) und eine Vielzahl innerer Lichtführungskomponenten (12) mit zwei unterschiedlichen Höhen, die abwechselnd zwischen den zwei äußeren Lichtführungskomponenten (12) angeordnet sind, umfassen, wobei die zwei äußeren Lichtführungskomponenten (12) höher als die relativ kürzeren inneren Lichtführungskomponenten (12) sind.

2. Lichtführungsvorrichtung nach Anspruch 1, wobei die Lichtführungsvorrichtung (1) aus Polycarbonat hergestellt ist.

3. Lichtführungsvorrichtung nach Anspruch 1, wobei die Lichtführungsvorrichtung (1) aus Acrylnitril-Butadien-Styrol-Copolymer hergestellt ist.

4. Lichtführungsvorrichtung nach Anspruch 1, wobei die Lichtführungsvorrichtung (1) aus einer Kombination aus Polycarbonat und Acrylnitril-Butadien-Styrol-Copolymer hergestellt ist.

5. Lichtführungsvorrichtung nach Anspruch 1, wobei mindestens zwei der Lichtführungskomponenten (12) auf der Basis (11) in einer quadratischen Fläche von 1 Quadratzentimeter gebildet sind.

6. Lichtführungsvorrichtung nach Anspruch 1, wobei die Lichteinfallsoberfläche (111) der Basis (11) planar ist.

7. Lichtführungsvorrichtung nach Anspruch 1, wobei der eingeschlossene Winkel, der zwischen jeder lichtemittierenden Oberfläche (121) und der Basis (11) definiert ist, vorzugsweise im Bereich von 26°~65° ist.

8. Lichtführungsvorrichtung nach Anspruch 1, wobei die Lichtführungskomponenten (12) selektiv von dreieckiger, viereckiger, fünfeckiger, sechseckiger, siebeneckiger oder achteckiger Form sind.

9. Lichtführungsvorrichtung nach Anspruch 1, wobei die Höhe der Lichtführungskomponenten (12) im Bereich von 0,8 mm~1,2 mm ist; wobei der Abstand der vorgegebenen lichtemittierenden Vorrichtungen (3) 15 mm ist.

10. Lichtführungsvorrichtung nach Anspruch 1, ferner umfassend eine Montagestruktur (13), die sich auf der Basis (11) befindet, wobei die Montagestruktur (13) eine Vielzahl von ausgesparten Aufnahmerillen (130), die sich jeweils auf gegenüberliegenden linken und rechten Seiten der Basis (11) befinden und in entgegengesetzte Richtungen gerichtet sind, eine zylindrische Positionierungssäule (131), die von einer Innenwand jeder der ausgesparten Aufnahmerillen (130) vorsteht, und zwei Haken (132), die sich jeweils an zwei gegenüberliegenden Enden der Basis (11) befinden, umfasst.

## Revendications

1. Dispositif de guidage de lumière (1) réalisé en un matériau transmettant la lumière dépourvu d'agent de diffusion de lumière et adapté pour être utilisé dans des ordinateurs et des dispositifs périphériques d'ordinateur pour améliorer l'uniformité de la luminosité, comprenant une base (11) munie d'une surface d'incidence de lumière (111) sur un côté de celui-ci pour faire face à un côté électroluminescent d'une pluralité de dispositifs électroluminescents prédéterminés (3), et une pluralité de composants de guidage de lumière reliés en continu et de configuration irrégulière (12) situés sur au moins un côté de ladite base (11) et capables de projeter de manière inégale une lumière qui les traverse vers l'extérieur et respectivement munis d'au moins trois surfaces électroluminescentes (121), chacune desdites surfaces électroluminescentes (121) définissant avec ladite base (11) un angle contenu respectif qui provoque un effet d'éblouissement lorsque la lumière traverse ledit composant de guidage de lumière respectif (12), ledit angle contenu étant dans la plage allant de 10° à 85°, **caractérisé en ce que** la direction d'émission de lumière directe desdits dispositifs électroluminescents prédéterminés (3) est opposée auxdites surfaces électroluminescentes (121) desdits composants de guidage de lumière (12) mais pas opposée à l'intersection des surfaces électroluminescentes (121), moyennant quoi les dispositifs électroluminescents (3) sont situés directement en dessous des surfaces électroluminescentes (121) des composants de guidage de lumière (12) et **en ce que** les composants de guidage de lumière (12) comprennent deux composants de guidage de lumière externes (12) et une pluralité de composants de guidage de lumière internes (12) de deux hauteurs différentes agencés alternativement entre lesdits deux composants de guidage de lumière externes (12), lesdits deux composants de guidage de lumière externes (12) étant plus hauts que lesdits composants de guidage de lumière internes relativement plus courts (12).

2. Dispositif de guidage de lumière tel que revendiqué dans la revendication 1, dans lequel ledit dispositif de guidage de lumière (1) est réalisé en polycarbonate.

3. Dispositif de guidage de lumière tel que revendiqué dans la revendication 1, dans lequel ledit dispositif de guidage de lumière (1) est réalisé en copolymère acrylonitrile-butadiène-styrène.

4. Dispositif de guidage de lumière tel que revendiqué dans la revendication 1, dans lequel ledit dispositif de guidage de lumière (1) est réalisé à partir d'une combinaison de polycarbonate et de copolymère acrylonitrile-butadiène-styrène.

5. Dispositif de guidage de lumière tel que revendiqué dans la revendication 1, dans lequel au moins deux desdits composants de guidage de lumière (12) sont formés sur ladite base (11) dans une zone carrée de 1 centimètre carré.

6. Dispositif de guidage de lumière tel que revendiqué dans la revendication 1, dans lequel ladite surface d'incidence de lumière (111) de ladite base (11) est plane.

7. Dispositif de guidage de lumière tel que revendiqué dans la revendication 1, dans lequel ledit angle contenu défini entre chacune desdites surfaces électroluminescentes (121) et ladite base (11) est de préférence dans la plage allant de 26° à 65°.

8. Dispositif de guidage de lumière tel que revendiqué dans la revendication 1, dans lequel lesdits composants de guidage de lumière (12) sont sélectivement de forme triangulaire, tétragonale, pentagonale, hexagonale, heptagonale ou octogonale.

9. Dispositif de guidage de lumière tel que revendiqué dans la revendication 1, dans lequel la hauteur desdits composants de guidage de lumière (12) est dans la plage allant de 0,8 mm à 1,2 mm ; le pas desdits dispositifs électroluminescents prédéterminés (3) est de 15 mm.

10. Dispositif de guidage de lumière tel que revendiqué dans la revendication 1, comprenant en outre une structure de montage (13) située sur ladite base (11), ladite structure de montage (13) comprenant une pluralité de rainures de réception en retrait (130) respectivement situées sur des côtés gauche et droit opposés de ladite base (11) et tournées dans des directions opposées, une colonne de positionnement cylindrique (131) faisant saillie d'une paroi interne de chacune desdites rainures de réception en retrait (130), et deux crochets (132) situés respectivement à deux extrémités opposées de ladite base (11).
